## Europäisches Patentamt
## European Patent Office
## Office européen des brevets

(19)

(11) Veröffentlichungsnummer: **0 046 937**
**B1**

(12) # EUROPÄISCHE PATENTSCHRIFT

(45) Veröffentlichungstag der Patentschrift:
04.04.84

(51) Int. Cl.³: **H 04 Q 9/00**

(21) Anmeldenummer: **81106488.0**

(22) Anmeldetag: **20.08.81**

(54) **Fernwirkeinrichtung mit Ausgabe von empfangenen Meldungen und von Zustandsmeldungen abhängig vom Betriebszustand der Stationen.**

(30) Priorität: **29.08.80 DE 3032619**

(43) Veröffentlichungstag der Anmeldung:
**10.03.82 Patentblatt 82/10**

(45) Bekanntmachung des Hinweises auf die Patenterteilung:
**04.04.84 Patentblatt 84/14**

(84) Benannte Vertragsstaaten:
**AT BE CH FR GB IT LI NL SE**

(56) Entgegenhaltungen:
**DE - A - 2 119 387**
**DE - A - 2 516 681**

**SIEMENS ZEITSCRIFT, Band 49, Nr. 4, 1975, Heft 4, Seiten 224-228, Erlangen, DE. A.v. GRUCHALLA et al.: "Fernwirksystem FB40 für Nachrichten-Weit-verkehrsnetze mit Anschluss für Meldungsanzeige, Drucker oder Rechner"**
**SIEMENS ZEITSCHRIFT, Band 45, Nr. 6, Juni 1971, Heft 6, Seiten 412-416, Erlangen, DE. H. HERKERT et al.: "FB 40, eine anpassungsfähige Fernwirkeinrichtung zum Überwachen und Steuern in Nachrichtennetzen"**

(73) Patentinhaber: **SIEMENS AKTIENGESELLSCHAFT, Berlin und München Wittelsbacherplatz 2, D-8000 München 2 (DE)**

(72) Erfinder: **Herkert, Hans, Dipl.-Ing., Kurzweg 3, D-8021 Hohenschäftlarn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Fernwirkeinrichtung mit Ausgabe von empfangenen Meldungen und von
Zustandsmeldungen abhängig vom Betriebszustand der Stationen

Die Erfindung bezieht sich auf eine Fernwirkeinrichtung mit wenigstens einer Zentralstation und mit weiteren Stationen, wobei die jeweils mit einer Stationsadresse versehenen Stationen durch ein gemeinsames Signalübertragungsnetz miteinander verbunden sind, die Zentralstation in zeitlicher Folge Informationen mit den weiteren Stationen austauscht und in einer auswertenden Station eine Auswerteschaltung vorgesehen ist, die eine Speichereinrichtung zur Speicherung und eine Ausgabeeinrichtung zur Ausgabe der empfangenen Meldungen und eine Speichereinrichtung zur Speicherung und eine Ausgabeeinrichtung zur Ausgabe von den Stationen zugeordneten Betriebszustandsmeldungen abhängig vom Betriebszustand der Stationen enthält. Dabei kann die Station eine Zentralstation oder eine mit auswertende Station sein.

Eine derartige Fernwirkeinrichtung ist bereits aus der DE-OS 2 516 681 bekannt.

Bei der bekannten Fernwirkeinrichtung überwacht eine auswertende Station, die eine Zentralstation oder eine mit auswertende Station sein kann, die Stationen. Die Stationen werden dabei durch eine Zentralstation zyklisch abgefragt und müssen auf eine Abfrage antworten. Antwortet eine Station nicht, so wird sie als gestört betrachtet. Der Zustand der Stationen wird in einem dynamischen Umlaufspeicher gespeichert. Jedem Betriebszustandssignal ist eine Adresse zugeordnet, die sich aus der Ordnungsnummer ergibt, die dem betreffenden Betriebszustands-Bit innerhalb der umlaufenden Serie von Bits zukommt. Die Stationsausgabeeinrichtung zur Ausgabe der Betriebszustandsmeldungen ist zusätzlich zu und unabhängig von der für die empfangenen Meldungen erforderlichen Meldungsausgabeeinrichtungen vorgesehen.

Aufgabe der Erfindung ist es, eine Fernwirkeinrichtung, bei der in einer auswertenden Station sowohl die von den Stationen empfangenen Meldungen als auch in Abhängigkeit vom Betriebszustand der Stationen in der auswertenden Station gewonnene Betriebszustandsmeldungen verarbeitet werden, derart auszubilden, daß sich für die Speicherung, Verarbeitung und Ausgabe sowohl der empfangenen Meldungen als auch der ermittelten Betriebszustandsmeldungen möglichst günstige Verhältnisse ergeben.

Gemäß der Erfindung wird die Fernwirkeinrichtung zur Lösung dieser Aufgabe derart ausgebildet, daß bei der Übermittlung der aus der Speichereinrichtung ausgelesenen Betriebszustandsmeldungen von der Zentralstation an die zugeordnete Ausgabeeinrichtung jeweils einer Gruppe von je einem Betriebszustand zugeordneten Bits eine gemeinsame Gruppenadresse zugeordnet ist und daß die Zahl der jeweils einer Gruppenadresse zugeordneten Bits gleich der Zahl von Meldungs-Bits ist, die jeweils ein und derselben Stationsadresse zugeordnet sind, und daß zum Anschluß wenigstens einer Ausgabeeinrichtung zur Ausgabe von Meldungen und wenigstens einer Ausgabeeinrichtung zur Ausgabe von Betriebszustandsmeldungen ein und dieselbe Schnittstelle vorgesehen ist.

Durch diese Maßnahmen ergibt sich der Vorteil, daß sich für die Ausgabe der übertragenen Meldungen und für die Ausgabe der in der auswertenden Station ermittelten Betriebszustandsmeldungen gleichartige Ausgabeeinheiten, insbesondere zur optischen und/oder akustischen Anzeige, verwenden lassen.

Zweckmäßigerweise werden bei der Speichereinrichtung zur Speicherung der Betriebszustandsmeldungen und bei der Speichereinrichtung zur Speicherung der von den Stationen empfangenen Meldungen den Gruppenadressen und den Stationsadressen jeweils gleich viele Bits zugeordnet, so daß gleichartige Speicher oder verschiedene Bereiche ein und desselben Speichers Verwendung finden können.

Zweckmäßigerweise sind die in den Speichereinrichtungen enthaltenen Speicher durch Speicher mit wahlfreiem Zugriff gebildet.

Der mit der Möglichkeit einer Verwendung gleichartiger Ausgabeeinheiten verbundene Vorteil gewinnt dadurch noch zusätzlich an Bedeutung, daß in weiterer Ausgestaltung der Erfindung in der Ausgabeeinrichtung jeweils ein Altspeicher und ein Neuspeicher und eine Einrichtung zum Alt-Neu-Vergleich und zur Quittierung von Informationsänderungen vorgesehen sind.

In weiterer Ausgestaltung der Erfindung wird die Fernwirkeinrichtung derart ausgebildet, daß wenigstens eine der Ausgabeeinrichtungen mit einer Anzeigevorrichtung versehen ist, die einen Teil mit einer der Zahl von Meldungen je Station entsprechenden Zahl von Anzeigeelementen und einen weiteren Teil zur Anzeige von Stations- oder Gruppenadressen enthält. Eine derartige Anzeigevorrichtung gestattet es in vorteilhafter Weise von Stationen empfangene Meldungen stationsweise und Betriebszustandsmeldungen stationsgruppenweise übersichtlich zur Anzeige zu bringen.

In weiterer Ausgestaltung der Erfindung kann eine der an die gemeinsame Schnittstelle angeschlossenen Ausgabeeinrichtungen ein datenverarbeitender Rechner mit nachgeschaltetem Drucker und/oder Datensichtgerät sein.

Zweckmäßigerweise wird die Fernwirkeinrichtung derart ausgebildet, daß der Speichereinrichtung der Zentralstation ein Umkodierer vorgeschaltet ist, der jeweils aus einer Stationsadresse und einem Betriebszustandsmeldungs-Bit bestehende, in der auswertenden Station gebildete Betriebszustandsmeldungen in eine Gruppenadresse und eine Gruppe von Betriebszustandsmeldungs-Bits umkodiert. Vorzugsweise ist der Umkodierer durch einen Mikroprozessor gebildet, der zugleich Bestandteil einer Einrichtung zur Ablaufsteuerung für den Informationsaustausch in der Fernwirkeinrichtung ist.

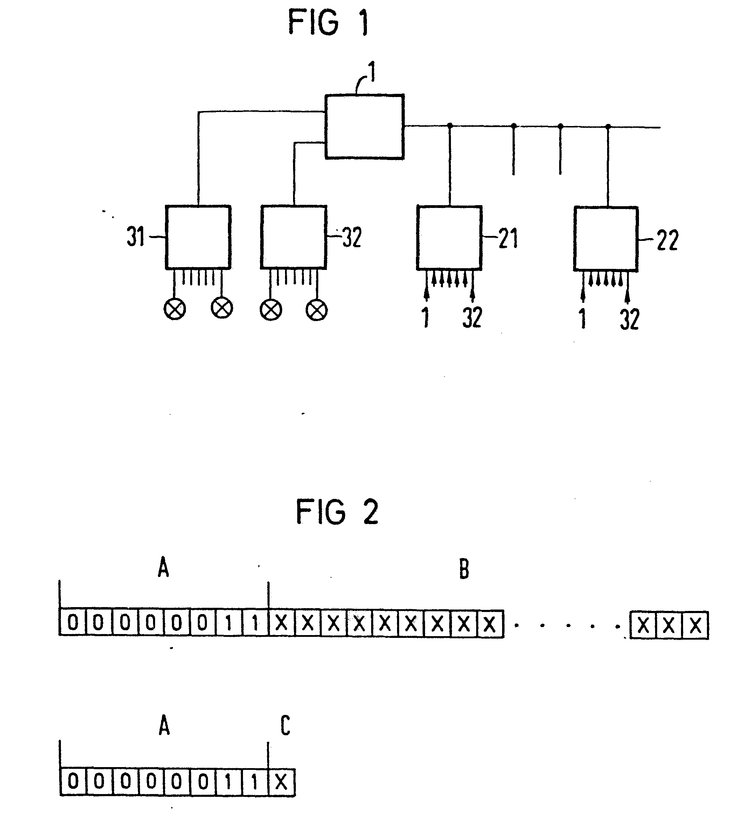

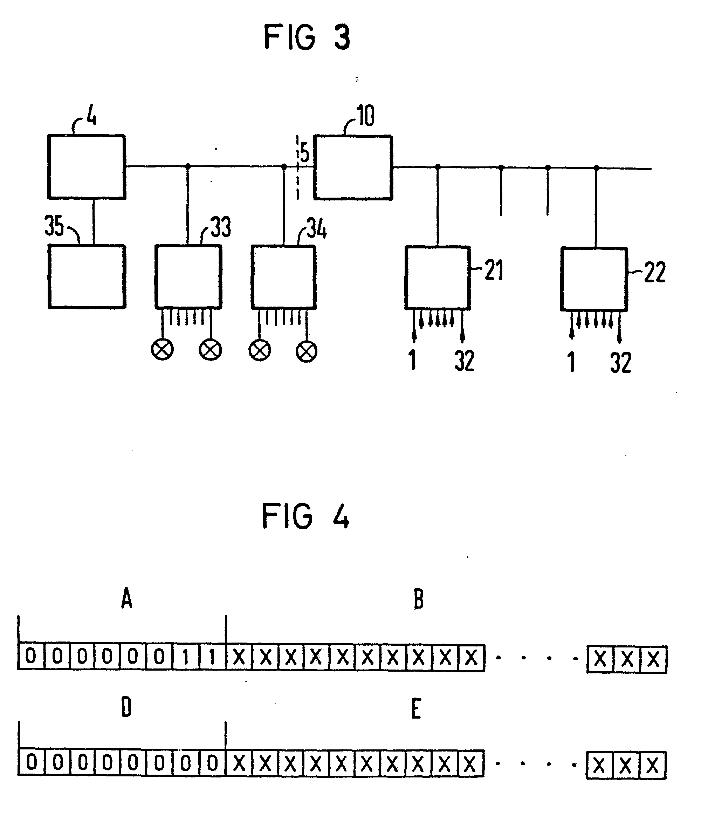

Die Erfindung wird anhand der in Fig. 1 gezeigten bekannten Fernwirkeinrichtung und anhand des in Fig. 3 gezeigten Ausführungsbeispieles sowie anhand der in den Fig. 2 und 4 gezeigten Beispiele für die Informationsweitergabe näher erläutert. Es zeigt

Fig. 1 eine bekannte Fernwirkeinrichtung, bei der unterschiedlich ausgebildete Ausgabeeinrichtungen an verschiedene Ausgänge einer Zentralstation angeschlossen sind,

Fig. 2 die unterschiedliche Informationsweitergabe für die verschiedenen Ausgabeeinrichtungen der Fernwirkeinrichtung nach Fig. 1,

Fig. 3 eine Fernwirkeinrichtung, bei der gleichartige Ausgabeeinrichtungen für empfangene Meldungen und für ermittelte Betriebszustandsmeldungen an einen gemeinsamen Ausgang der Zentralstation angeschlossen sind und

Fig. 4 Telegrammbeispiele für die in Fig. 3 gezeigte Fernwirkeinrichtung.

Bei der in Fig. 1 gezeigten Fernwirkeinrichtung ist die Zentralstation 1 über einen gemeinsamen Signalübertragungsweg mit den weiteren Stationen der Fernwirkeinrichtung verbunden, von denen lediglich die Stationen 21 und 22 dargestellt sind. Diese Stationen 21, 22 enthalten jeweils 32 Eingänge für die zu übertragenden Meldungen.

An verschiedene Ausgänge der Zentralstation 1 sind die Meldungsausgabeeinrichtungen 31 zur Ausgabe empfangener Meldungen und die Stationsausgabeeinrichtung 32 zur Ausgabe von Betriebszustandsmeldungen, aus denen der Betriebszustand der Stationen hervorgeht, angeschlossen. Die Meldungsausgabeeinrichtung 31 ist mit Anzeigeelementen zur Meldungsanzeige versehen. Der Stationsausgabeeinrichtung 32 sind Anzeigeelemente zur Stations-Zustandsanzeige zugeordnet.

Die Fernwirkzentrale bzw. Zentralstation 1 fragt zyklisch die Stationen 21, 22, usw. ab. Diese antworten jeweils mit einem Telegramm, in dem ihre Adresse und die zu übermittelnden Meldungen enthalten sind. Die Zentralstation 1 gibt diese Adresse und die Meldungen an die Meldungsausgabeeinrichtung 31 weiter.

Die Zentrale 1 überwacht mit der zyklischen Abfrage zugleich die Stationen; denn eine abgefragte Station muß innerhalb einer bestimmten Zeit antworten, sonst wird sie als gestört registriert. Die Stationsausgabeeinrichtung 32 dient zur Meldung von gestörten Stationen und unterscheidet sich von der Meldungsausgabeeinrichtung 31 wesentlich.

Will man zusätzlich zu den empfangenen Meldungen auch die in der Zentralstation ermittelten Betriebszustandsmeldungen in einem Prozeßrechner weiter verarbeiten, so erfordert dies beim Prozeßrechner einen zusätzlichen Eingang und ein zusätzliches Programm. Die Eigenüberwachung des Fernwirknetzes erhöht daher die Anzahl der Baugruppentypen und die Komplexität der Anlage erheblich.

Fig. 2 zeigt, wie bei einer Einrichtung nach Fig. 1 Informationen übertragen werden können. Bei dem gezeigten Beispiel bestehen die an die Meldungsausgabeeinrichtung 31 über einen Parallelbus abgegebenen Meldeinformationen aus einer mehrere Bits breiten Stationsadresse A und einem 32 Bit breiten Meldeinformationsteil B für die Meldungen aus der betreffenden Station.

Ganz anders werden in dem angenommenen Beispiel die Betriebszustandsmeldungen weitergegeben. Diese bestehen aus der mehrere Bit breiten Stationsadresse A und einem einzigen zusätzlichen Bit C, das bei einer gestörten Station die log 1 und bei einer intakten Station die log 0 annimmt.

Man sieht, daß sich die von der Zentralstation abgegebenen Informationen erheblich voneinander unterscheiden.

Fig. 3 zeigt eine Fernwirkeinrichtung, bei der die genannten Nachteile beseitigt sind.

Die Zentralstation 10 ist über einen gemeinsamen Signalübertragungsweg mit den Stationen der Fernwirkeinrichtung verbunden, von denen in der Figur lediglich die Stationen 21 und 22 dargestellt sind. Die Stationen haben jeweils 32 Meldungseingänge für die zu übertragenden Meldungen.

An ein und denselben Ausgang der Zentralstation 10, nämlich an ein und dieselbe Schnittstelle 5 sind die Ausgabeeinrichtungen 33 und 34 angeschlossen, die gleichartig ausgebildete Baueinheiten sind. Die eine Ausgabeeinrichtung 33 ist mit Anzeigeelementen zur Anzeige der empfangenen Meldungen versehen, die andere Ausgabeeinrichtung 34 mit Anzeigeelementen zur Anzeige der ermittelten Betriebszustände. Außerdem ist an die Schnittstelle 5 der Prozeßrechner 4 angeschlossen, dem die Ausgabeeinheit 35 nachgeschaltet ist. Diese Ausgabeeinheit 34 kann insbesondere ein Drucker und/oder ein Datensichtgerät sein.

Die Zentrale 10 der Fernwirkeinrichtung fragt zyklisch die Stationen 21, 22, usw. ab. Jede Station 21, 22, usw. antwortet mit einem Telegramm, in dem ihre Adresse und die 32 Meldungen enthalten sind. Antwortet eine Station 21, 22 usw. einmal oder in einer vorgegebenen Zahl aufeinanderfolgender Aufrufe jeweils innerhalb einer bestimmten Zeit nicht, so wird sie als gestört behandelt. Im Speicher der Zentrale 10 ist deshalb über den Zustand jeder Station 21, 22 eine Zustandsmeldung abgelegt.

Die Zentralstation 10 zeigt die gestörten, die nicht vorhandenen und auch die einwandfrei arbeitenden Stationen über die Ausgabeeinrichtung 34 an.

Bei der Bildung der Betriebszustandsmeldungen wird ein Stationsausfall zweckmäßigerweise dadurch festgestellt, daß einmal oder mehrmals zwei Zentralentelegramme unmittelbar aufeinanderfolgen. Die von der Ausfall-Prüfschaltung auszuwertenden Kriterien »Zentralstation sendet« und »Station antwortet« können auf unterschiedliche Art gewonnen werden. Insbesondere liegen diese beiden Kriterien bei Fernwirkstationen, die bei Sendebereitschaft nur den Sender und bei Empfangsbereitschaft nur den Empfänger einschalten, bereits in der Einrichtung zur Sende-, Empfangs-Umschaltung als Steuersignale vor. Eine andere Möglichkeit besteht vorzugsweise darin, daß die übertragenen Telegramme Kriterien darüber enthalten, ob das Telegramm von einer Zentralstation oder einer antwortenden Station ausgesandt wurde und daß diese Kriterien von einer Erkennungsschaltung erkannt werden.

Soll eine Station erst nach mehrmaligem vergeblichem Aufruf als gestört gemeldet werden, so werden die Ausgangssignale der Ausfall-Prüfschaltung einem Zähler zugeführt, der bis zu einer vorgegebenen Zahl zählt und erst dann eine Ausfallmeldung abgibt. Dieser Zähler wird zweckmäßigerweise für den Fall, daß eine Station antwortet, zurückgestellt.

Die Zentralstation 10 speichert die Betriebszustandsmeldungen über jede der Stationen 21, 22, usw. in ihrer Speichereinrichtung und ordnet einer bestimmten Zahl von Zustandsmeldungen — im vorliegenden Fall 32 Betriebszustandsmeldungen — eine Gruppenadresse zu. Diese Zuordnung erfolgt zweckmäßigerweise genau in derselben Weise, wie die Stationen 21, 22 jeweils 32 Meldungen eine Adresse geben. Bei den meldungsgebenden Stationen liegen an 32 Eingängen Binärsignale, die in einem Impulstelegramm an die Zentralstation übertragen werden. In diesen Telegrammen folgen auf die Stationsadresse 32 Bits, die durch Abfrage der 32 Eingänge gewonnen werden und somit den genannten Binärsignalen entsprechen.

In derselben Weise können in der Zentrale Betriebszustandsmeldungen, die an den Stationen zugeordneten Ausgängen einer Ausfall-Prüfschaltung zur Verfügung stehen, mit Gruppenadressen versehen und weitergegeben werden.

Die Zentrale 10 gibt die Betriebszustandsmeldungen über die Stationen 21, 22, usw. genauso weiter, wie die Meldungen aus den Stationen.

Auf diese Weise können zur Anzeige von Stationsausfällen die gleichen Ausgabeeinrichtungen verwendet werden, wie für die Meldungen. Außerdem erfolgen die akustische und optische Anzeige sowie die Quittierung eines Stationsausfalls in derselben Weise, wie die Anzeige und die Quittierung einer Meldung.

Ebenso werden einem datenverarbeitenden Rechner 4 die Betriebszustandsmeldungen der Stationen 21, 22, usw. über die gleiche Schnittstelle 5 übertragen, wie die Meldungen aus den Stationen und zur Verarbeitung beider Meldungsarten im Rechner 4 ist nur ein Programm nötig. Es braucht nur einmal festgelegt zu werden, bei welchen Adressen die Meldungen aus den Stationen 21, 22, usw. und bei welchen Adressen die Betriebszustandsmeldungen über die Stationen 21, 22, usw. liegen.

Das Zuordnen einer Adresse zu den Betriebszustandsmeldungen über je 32 Stationen läßt sich in der Zentralstation 10 mit einem Mikrocomputer besonders wirtschaftlich durchführen.

Wie Fig. 4 zeigt, haben die von der Zentralstation an die Ausgabeeinrichtungen abgegebenen Informationen dieselbe Form. Zuerst wird an die Schnittstelle 5 ein Telegramm abgegeben, bei dem auf die 8 Bit lange Stationsadresse A die Meldungen aus der betreffenden Station folgen. Bei z. B. 32 Meldungen besteht die Stationsadresse A aus einem Byte und der Informationsteil B aus 4 Byte mit je 8 Meldungen.

Darauf folgt ein Telegramm, das die Betriebszustandsmeldungen für eine Gruppe von 32 Stationen enthält. In diesem Telegramm besteht die Störungsadresse bzw. Gruppenadresse D ebenfalls aus einem Byte und der Informationsteil E aus 4 Byte mit je 8 Zustandsmeldungen über eine Gruppe von 32 Stationen, z. B. der 32 ersten Stationen. Im Informationsteil E bedeutet für die einzelnen Bits eine log 1, daß die betreffende Station gestört ist und eine log 0, daß die Station in Ordnung ist.

Die Meldeinformationen oder Betriebszustandsinformationen werden an die Schnittstelle 5 vorzugsweise in serieller Form abgegeben. Sie können jedoch gegebenenfalls als Parallelinformationen übertragen werden.

**Patentansprüche**

1. Fernwirkeinrichtung mit wenigstens einer Zentralstation (1, 10) und mit weiteren Stationen (21, 22), wobei die jeweils mit einer Stationsadresse (A) versehenen Stationen (21, 22) durch ein gemeinsames Signalübertragungsnetz miteinander verbunden sind, die Zentralstation (1, 10) in zeitlicher Folge Informationen mit den weiteren Stationen (21, 22) austauscht und in einer auswertenden Station eine Auswerteschaltung vorgesehen ist, die eine Speichereinrichtung zur Speicherung und eine Ausgabeeinrichtung (31, 33) zur Ausgabe der empfangenen Meldungen und eine Speichereinrichtung zur Speicherung und eine Ausgabeeinrichtung (32, 34) zur Ausgabe von den Stationen (21, 22) zugeordneten Betriebszustandsmeldungen abhängig vom Betriebszustand der Stationen (21, 22) enthält, wobei die auswertende Station eine Zentralstation (1, 10) oder eine mit auswertende Station sein kann, dadurch gekennzeichnet, daß bei der Übermittlung der aus der Speichereinrichtung ausgelesenen Betriebszustandsmeldungen von der Zentralstation (10) an die zugeordnete Ausgabeeinrichtung (34) jeweils einer Gruppe von je einem Betriebszustand zugeordneten Bits eine gemeinsame Gruppenadresse (D) zugeordnet ist und daß die Zahl der jeweils einer Gruppenadresse (D) zugeordneten Bits gleich der Zahl von Meldungs-Bits ist, die jeweils ein und derselben Stationsadresse (A) zugeordnet sind, und daß zum Anschluß wenigstens einer Ausgabeeinrichtung (33) zur Ausgabe von Meldungen und wenigstens einer Ausgabeeinrichtung (34) zur Ausgabe von Betriebszustandsmeldungen ein und dieselbe Schnittstelle (5) vorgesehen ist.

2. Fernwirkeinrichtung nach Anspruch 1, dadurch gekennzeichnet, daß bei der Speichereinrichtung zur Speicherung der Betriebszustandsmeldungen und bei der Speichereinrichtung zur Speicherung der von den Stationen (21, 22, usw.) empfangenen Meldungen den Gruppenadressen (D) und den Stationsadressen (A) gleich viele Bits zugeordnet sind.

3. Fernwirkeinrichtung nach Anspruch 1 oder 2, dadurch gekennzeichnet, daß die in den Speichereinrichtungen enthaltenen Speicher durch Speicher mit wahlfreiem Zugriff gebildet sind.

4. Fernwirkeinrichtung nach einem der Ansprüche 1 bis 3, dadurch gekennzeichnet, daß in der Ausgabeeinrichtung (33, 34) ein Altspeicher, ein Neuspeicher und eine Einrichtung zum Alt-Neu-Vergleich mit Quittierung von Informationsänderungen vorgesehen sind.

5. Fernwirkeinrichtung nach einem der Ansprüche 1 bis 4, dadurch gekennzeichnet, daß wenigstens eine der Ausgabeeinrichtungen (33, 34) mit einer Anzeigevorrichtung versehen ist, die einen Teil mit einer der Zahl von Meldungen je Station (21, 22) entsprechenden Zahl von Anzeigeelementen und einen weiteren Teil zur Anzeige von Stations- oder Gruppenadressen (A, D) enthält.

6. Fernwirkeinrichtung nach einem der Ansprüche 1 bis 5, dadurch gekennzeichnet, daß eine der an die gemeinsame Schnittstelle (5) angeschlossenen Ausgabeeinrichtungen ein datenverarbeitender Rechner (4) mit nachgeschaltetem Drucker und/oder Datensichtgerät (35) ist.

7. Fernwirkeinrichtung nach einem der vorhergehenden Ansprüche, dadurch gekennzeichnet, daß der Speichereinrichtung der Zentralstation (10) ein Umkodierer vorgeschaltet ist, der jeweils aus einer Stationsadresse und einem Betriebszustandsmeldungsbit bestehende, in der auswertenden Station gebildete Betriebszustandsmeldungen in eine Gruppenadresse und eine Gruppe von Betriebszustandsmeldungsbits umkodiert.

8. Fernwirkeinrichtung nach Anspruch 7, dadurch gekennzeichnet, daß der Umkodierer durch einen Mikroprozessor gebildet ist, der zugleich Bestandteil einer Einrichtung zur Ablaufsteuerung für den Informationsaustausch in der Fernwirkeinrichtung ist.

## Claims

1. A remote control installation with at least one central station (1, 10) and further stations (21, 22), each provided with a station address (A), connected to one another by a common signal transmission network, the central station (1, 10) exchanging items of information with the further stations (21, 22) in a time sequence, and with an analysing station containing an analysis circuit which itself contains a storage device and an output device (31, 33) for received messages, and a storage device and an output device (32, 34) for operating state messages assigned to the stations (21, 22), independently of the operating state of the stations (21, 22), where the analysing station can consist of a central station (1, 10) or a station which additionally performs analysis, characterised in that during the transmission from the central station (10) to the assigned output device (34) of the operating state messages which have been read out from the storage device, each group of bits, assigned to one operating state, is allocated a common group address (D), and that the number of bits in each case assigned to a group address (D) is equal to the number of message bits which are in each case assigned to one and the same station address (A), and that one interface (5) is provided for the connection of at least one output device (33) for output messages and at least one output device (34) for operating state messages.

2. A remote control installation as claimed in Claim 1, characterised in that in the case of the storage device which serves to store the operating state messages and in the case of the storage device which serves to store the messages received from the stations (21, 22 etc.), the group addresses (D) and the station addresses (A) are assigned an equal number of bits.

3. A remote control device as claimed in Claim 1 or 2, characterised in that the stores contained in the storage devices are formed by random access stores.

4. A remote control device as claimed in one of the claims 1 to 3, characterised in that the output device (33, 34) contains an old store, a new store, and a device for old-new comparison with acknowledgement of information changes.

5. A remote control installation as claimed in one of the Claims 1 to 4, characterised in that at least one of the output devices (33, 34) is provided with a display device having one part containing a number of display elements which corresponds to the number of messages in respect of each station (21, 22), and a further part which serves to display station or group addresses (A, D).

6. A remote control installation as claimed in one of the Claims 1 to 5, characterised in that one of the output devices connected to the common interface (5) consists of a data-processing computer (4) followed by a printer and/or data viewing device (35).

7. A remote control installation as claimed in one of the preceding Claims, characterised in that the storage device in the central station (10) is preceded by a recoder by which operating state messages, which each consist of a station address and an operating state message bit formed in the analysing station, are recoded into a group address and a group of operating state message bits.

8. A remote control device as claimed in Claim 7, characterised in that the recoder consists of a microprocessor which simultaneously forms part of a flow control device for information exchange in the remote control device.

**Revendications**

1. Dispositif de télécommande comportant au moins une station centrale (1, 10) et d'autres stations (21, 22), dans lequel les stations (21, 22) munies respectivement d'une adresse de station (A) sont reliées entre elles par un réseau commun de transmission de signaux, la station centrale (1, 10) échange selon une séquence temporelle des informations avec les autres stations (21, 22) et il est prévu, dans une station réalisant une évaluation, un circuit d'évaluation qui contient un dispositif de mémoire (31) servant à mémoriser les informations de signalisation reçues et un dispositif de sortie (33) servant à délivrer les informations de signalisation reçues et un dispositif de mémoire (32) servant à mémoriser les informations de signalisation d'état de fonctionnement associées aux stations (21, 22) et un dispositif de sortie (34) servant à délivrer ces informations, en fonction de l'état de fonctionnement des stations (21, 22), la station effectuant l'évaluation pouvant être une station centrale (1, 10) ou une station réalisant également l'évaluation, caractérisé par le fait que lors de la retransmission des informations de signalisation d'état de fonctionnement lues hors du dispositif de mémoire, de la station centrale (10) au dispositif de sortie (34) associé, une adresse commune de groupe (B) est associée respectivement à un groupe de bits qui sont associés à un état de fonctionnement, et que le nombre des bits associés respectivement à une adresse de groupe (D) est égal au nombre de bits d'informations de signalisation qui sont associés respectivement à une même adresse de station (A), et que pour le raccordement d'au moins un dispositif de sortie (33) servant à délivrer des informations de signalisation et d'au moins un dispositif de sortie (34) servant à délivrer des informations de signalisation d'état de fonctionnement, il est prévu une même interface (5).

2. Dispositif de télécommande suivant la revendication 1, caractérisé par le fait que dans le dispositif de mémoire servant à mémoriser les informations de signalisation d'état de fonctionnement et dans le dispositif de mémoire servant à mémoriser les informations de signalisation reçues par les stations (21, 22, etc.) des nombres identiques de bits sont associés aux adresses de groupe (D) et aux adresses de station (A).

3. Dispositif de télécommande suivant la revendication 1 ou 2, caractérisé par le fait que les mémoires contenues dans les dispositifs de mémoire sont formés par des mémoires à accès direct.

4. Dispositif de télécommande suivant l'une des revendications 1 à 3, caractérisé par le fait que dans le dispositif de sortie (33, 34) il est prévue une mémoire de valeurs anciennes, une mémoire de valeurs récentes et un dispositif servant à comparer les valeurs anciennes et les valeurs récentes avec accusé de réception de modifications d'informations.

5. Dispositif de télécommande suivant l'une des revendications 1 à 4, caractérisé par le fait qu'au moins l'un des dispositifs de sortie (43, 45) est muni d'un dispositif d'affichage dont une partie comporte un nombre d'organes d'affichage correspondant au nombre d'informations de signalisation pour chaque station (21, 22), et dont une autre partie sert à l'affichage d'adresses de stations ou de groupes (A, D).

6. Dispositif de télécommande selon l'une des revendications 1 à 5, caractérisé par le fait que l'un des dispositifs de sortie raccordés à l'interface commune (5) est un calculateur de traitement des données (4) en aval duquel est branché une imprimante et/ou un appareil de visualisation des données (35).

7. Dispositif de télécommande suivant l'une des revendications précédentes, caractérisé par le fait qu'en amont du dispositif de mémoire de la station centrale (10) est branché un codeur qui code les informations de signalisation d'état de fonctionnement constitués respectivement par une adresse de station et par un bit d'information de signalisation d'état de fonctionnement et qui sont formés dans la station effectuant l'évaluation, en une adresse de groupe et en un groupe de bits d'informations de signalisation d'état de fonctionnement.

8. Dispositif de télécommande suivant la revendication 7, caractérisé par le fait que le codeur est constitué par un microprocesseur qui fait partie simultanément d'un dispositif de commande de déroulement pour l'échange d'informations dans le dispositif de télécommande.

# FIG 1

# FIG 2

0 046 937

# FIG 3

# FIG 4

9